# EUROPÄISCHE PATENTSCHRIFT

(11) **EP 3 123 074 B1**
(45) Veröffentlichungstag und Bekanntmachung des Hinweises auf die Patenterteilung: **31.10.2018**
(21) Anmeldenummer: 15706410.6
(22) Anmeldetag: 17.02.2015
(51) Int. Cl.: F17C 13/10, F17C 13/12

(54) **SYSTEM ZUR SPEICHERUNG EINES UNTER DRUCK STEHENDEN GASES SOWIE VERFAHREN ZUM ENTLEEREN EINES SPEICHERBEHÄLTERS FÜR EIN UNTER DRUCK STEHENDES GAS**
SYSTEM FOR STORING A PRESSURIZED GAS AND METHOD FOR EMPTYING A STORAGE CONTAINER FOR A PRESSURIZED GAS
SYSTÈME DE STOCKAGE D'UN GAZ SOUS PRESSION ET PROCÉDÉ DE VIDANGE D'UN RÉSERVOIR DE STOCKAGE D'UN GAZ SOUS PRESSION

(30) Priorität: 27.03.2014 DE 102014205712
(43) Veröffentlichungstag der Anmeldung: 01.02.2017
(73) Patentinhaber: Bayerische Motoren Werke Aktiengesellschaft, 80809 München (DE)
(72) Erfinder: KUNBERGER, Jan-Mark, 81241 München (DE); KUNZE, Klaas, 80639 Muenchen (DE); LANDECK, Bastian, 82008 Unterhaching (DE); PELGER, Andreas, 85737 Ismaning (DE); SCHOTT, Stefan, 82140 Olching (DE)
(86) Internationale Anmeldenummer: PCT/EP2015/053342
(87) Internationale Veröffentlichungsnummer: WO 2015/144359

(56) Entgegenhaltungen:
- WO-A1-2004/014683
- DE-A1-102007 022 610
- DE-A1-102010 006 516
- DE-A1-102010 006 518
- DE-A1-102011 114 722
- DE-U1-202004 021 365

## Beschreibung

Die Erfindung betrifft ein System zur Speicherung eines unter Druck stehenden Gases in einem Kraftfahrzeug, mit einem Speicherbehälter und wenigstens einem thermisch aktivierbaren Sicherheitsventil zur Entleerung des Speicherbehälters, welches sich bei Vorliegen einer entsprechenden hohen Temperatur selbst aktiviert. Weiterhin betrifft die Erfindung ein Verfahren zum Entleeren eines Speicherbehälters für ein unter Druck stehendes Gas in einem Kraftfahrzeug.

Im Zuge alternativer Antriebskonzepte werden zunehmend Fahrzeuge entwickelt, die mit Gas, etwa Erdgas oder Wasserstoff, betrieben werden. Derartige Fahrzeuge benötigen einen Speicherbehälter für das unter hohem Druck stehende Gas sowie gewisse Sicherheitseinrichtungen, die dafür Sorge tragen, dass der im Speicherbehälter herrschende Druck den Berstdruck des Behälters nicht erreicht, um ein Bersten des Speicherbehälters zu verhindern.

Für den Brandfall sind diese Speicherbehälter zudem mit thermisch aktivierbaren Sicherheitsventilen (Thermal Pressure Relief Devices, TPRD) ausgestattet, die sich bei Vorliegen einer entsprechend hohen Temperatur selbst aktivieren, beispielsweise indem eine Verschlussmasse aufschmilzt. So kann erreicht werden, dass sich der Druckgas-Speicherbehälter entleert, ehe er aufgrund des zu hohen Innendrucks birst.

Nun ist es denkbar, dass der Speicherbehälter, beispielsweise bei einem Unfall, vorgeschädigt wird. Dadurch kann der Berstdruck des Speicherbehälters unter den Betriebsdruck abgesenkt werden oder zumindest unter den Auslösedruck der vorgesehenen Sicherheitseinrichtungen, so dass der beschädigte Behälter ein potentielles Sicherheitsrisiko darstellt, solange er noch unter Druck steht. Zwar weist ein solcher Druckgas-Speicherbehälter üblicherweise sogenannte Serviceventile auf, über die eine manuelle Entleerung möglich ist, jedoch sind diese unter Umständen an einer schwer erreichbaren Stelle am Fahrzeug angeordnet oder durch den vorliegenden Unfall schwer zugänglich. Auch eine eventuell vorgesehene Servicefunktion zum Druckentlasten über einen sogenannten Service-Port kann bei einem Unfall durch Wegfall des Bordnetzes nicht länger verfügbar sein.

Es ist daher oftmals nicht möglich, nach einem Unfall den Speicherbehälter gezielt zu entleeren und das System somit in einen stabilen Zustand zu versetzen.

Die WO/2004/014683 A1 zeigt eine Sicherheitsvorrichtung für Kraftfahrzeuge.Aus der DE 10 2010 006 516 A1 ist ein gattungsgemäßes System zur Speicherung eines unter Druck stehenden Gases in einem Fahrzeug bekannt, bei dem im Falle eines Unfalls ein aktives Sicherheitssystem, welches beispielsweise auch einen Airbag auslöst, ein Aktivierungssignal an eine Entleerungseinrichtung übermittelt. Durch das Aktivierungssignal wird eine Sprengladung gezündet, die im Bereich eines thermisch aktivierbaren Sicherheitsventils angeordnet sein kann, und so den Speicherbehälter entleert. Hierbei wird auch die Möglichkeit angesprochen, die Sprengladung über Funk von außerhalb des Fahrzeugs zu zünden, wobei ein von Rettungskräften mitgeführter Funksender ein Signal an das Fahrzeug-Sicherheitssystem sendet, welches dann das Aktivierungssignal an die Entleerungseinrichtung generiert.

Nachteilig bei der beschriebenen Ausgestaltung ist, dass bei einem unfallbedingten Ausfallen der Fahrzeugelektronik diese Möglichkeit der gezielten Entleerung des Druckgas-Speicherbehälters nicht länger gegeben ist.

Die Erfindung schafft demgegenüber ein System zur Speicherung eines unter Druck stehenden Gases in einem Kraftfahrzeug bzw. ein Verfahren zum Entleeren eines Speicherbehälters für ein unter Druck stehendes Gas, bei dem im Bedarfsfall zuverlässig eine gezielte Entleerung des Druckgas-Speicherbehälters möglich ist.

Gemäß einem ersten Aspekt der Erfindung ist dazu bei einem System der eingangs genannten Art eine zusätzliche, aktivierbare Entleerungsvorrichtung für den Speicherbehälter vorgesehen, die eine Schnittstelle für eine externe Energiequelle hat, an die die externe Energiequelle angeschlossen werden kann, um den Speicherbehälter gezielt zu entleeren. Somit ist es möglich, nach einem Unfall durch Anschließen einer externen (also nicht zum Fahrzeug gehörigen) Energiequelle unabhängig von der Funktionstüchtigkeit der Fahrzeugelektronik die benötigte Energie bereitzustellen, um mithilfe der aktivierbaren Entleerungsvorrichtung den Speicherbehälter gezielt zu entleeren.

Gemäß einer bevorzugten Ausführungsform der Erfindung umfasst die zusätzliche Entleerungsvorrichtung eine am thermisch aktivierbaren Sicherheitsventil vorgesehene Auslösevorrichtung, an deren Schnittstelle die externe Energiequelle angeschlossen werden kann, um das Sicherheitsventil gezielt auszulösen. Es wird also das ohnehin vorhandene thermisch aktivierbare Sicherheitsventil genutzt, welches nach Anschließen der externen Energiequelle gezielt ausgelöst wird und so den Speicherbehälter entleert. Auf diese Weise erhält man eine einfache und somit kostengünstige Ausgestaltung.

Alternativ wäre es denkbar, ein zusätzliches Ventil als Entleerungsvorrichtung vorzusehen, welches parallel zum thermisch aktivierbaren Sicherheitsventil angeordnet ist und mittels der externen Energiequelle aktiviert wird.

Vorzugsweise weist die Schnittstelle Anschlüsse, insbesondere elektrische Anschlüsse, für die externe Energiequelle auf, die in einem von außen zugänglichen Bereich des Kraftfahrzeugs angeordnet sind. Dies ermöglicht es zum Beispiel Rettungskräften nach einem Unfall, das Druckgas im Speicherbehälter gezielt zu entleeren, um ein späteres Bersten des Speicherbehälters, etwa beim Abtransport des Fahrzeugs, zu verhindern.

In einer Weiterbildung der Erfindung kann die externe Energiequelle nach Anschließen an die Entleerungsvorrichtung von extern aktiviert werden, um den Speicherbehälter zu entleeren. Auf diese Weise lässt sich der Zeitpunkt des Entleerens exakt bestimmen und gezielt verzögern.

Vorzugsweise erfolgt dabei die Aktivierung ferngesteuert, insbesondere über Funk oder eine elektrische Zündleitung. Dies ermöglicht es dem Fahrzeughalter und weiteren anwesenden Personen, sich zunächst in einen sicheren Abstand vom Fahrzeug zu bringen, bevor der Speicherbehälter gezielt entleert wird.

Im Falle, dass die Entleerungsvorrichtung eine am Sicherheitsventil vorgesehene Auslösevorrichtung umfasst, weist die Auslösevorrichtung bevorzugt einen thermischen Aktuator, insbesondere eine elektrische Heizung, auf. Diese kann z.B. als Heizwiderstand ausgebildet sein und muss so dimensioniert sein, dass die Auslösetemperatur des thermisch aktivierbaren Sicherheitsventils (ca. 105-110°C) erreicht wird, nicht jedoch die Zündtemperatur des Gases.

In einer konstruktiv einfachen Ausgestaltung weist die Auslösevorrichtung eine Heizspirale auf, mit der das thermisch aktivierbare Sicherheitsventil zumindest teilweise umwickelt ist. Dabei kann das Sicherheitsventil als Ganzes umwickelt sein, oder es ist lediglich eine zum Sicherheitsventil gehörige Glasampulle mit der Heizspirale umwickelt und gegebenenfalls isoliert, dies natürlich mit einem brennbaren Material, um die Funktionalität im Brandfall zu gewährleisten. Ebenso könnte die Heizspirale in eine Wand einer beim thermisch aktivierbaren Sicherheitsventil vorgesehenen Glasampulle integriert sein. In den beiden letztgenannten Fällen wird weniger Energie benötigt, um das Sicherheitsventil zu aktivieren.

In einer alternativen Ausgestaltung umfasst die Entleerungsvorrichtung einen mechanischen oder einen pyrotechnischen Aktuator. Ein Beispiel für einen mechanischen Aktuator ist ein Piezoaktuator, der bei Aktivierung eine Glasampulle des Sicherheitsventils zerstört.

Um einem möglichen Missbrauch vorzubeugen, können die Anschlüsse für die externe Energiequelle in einem Innenraum des Kraftfahrzeugs angeordnet sein.

Alternativ oder zusätzlich kann die Entleerungsvorrichtung einen im normalen Fahrbetrieb offenen Unterbrechungsschalter aufweisen, der durch ein Crashsignal eines Fahrzeugsicherheitssystems geschlossen wird. Auch dann ist gewährleistet, dass sich die Entleerungsvorrichtung nur im Bedarfsfall, nämlich nach einem Unfall, aktivieren lässt.

Wie bereits eingangs erwähnt, handelt es sich bei dem unter Druck stehenden Gas insbesondere um Wasserstoff oder Erdgas, vorzugsweise komprimiertes Erdgas (sogenanntes Compressed Natural Gas, CNG).

Die eingangs genannte Aufgabe wird ebenfalls gelöst durch ein Verfahren zum Entleeren eines Speicherbehälters für ein unter Druck stehendes Gas in einem Kraftfahrzeug, welches insbesondere in einem System der bisher beschriebenen Art Anwendung findet. Das erfindungsgemäße Verfahren weist dabei die folgenden Schritte auf: an eine an dem Speicherbehälter vorgesehene Entleerungsvorrichtung wird im Bedarfsfall eine externe Energiequelle angeschlossen, und die externe Energiequelle wird aktiviert, um über die dadurch betätigte Entleerungsvorrichtung den Speicherbehälter gezielt zu entleeren.

Unter Bedarfsfall ist auch hier z.B. ein Unfall zu verstehen. Im Gegensatz zu einer unmittelbaren Aktivierung der Entleerungsvorrichtung durch das Unfallereignis selbst, etwa mittels eines aktiven Fahrzeug-Sicherheitssystems, zeichnet sich das erfindungsgemäße Verfahren dadurch aus, dass der Speicherbehälter nur bei Bedarf und zeitlich verzögert entleert wird. Fahrzeuginsassen können somit erst geborgen werden, bevor Gas austritt, das sich beim Entleeren entzünden könnte. Die Bereitstellung der für die Entleerungsvorrichtung benötigten Energie durch eine externe Energiequelle stellt zudem sicher, dass die Entleerung des Speicherbehälters auch dann erfolgen kann, wenn eine fahrzeuginterne Stromversorgung ausfällt.

In einer bevorzugten Weiterbildung des erfindungsgemäßen Verfahrens umfasst die Entleerungsvorrichtung eine Auslösevorrichtung, die an einem thermisch aktivierbaren Sicherheitsventil zur Entleerung des Speicherbehälters vorgesehen ist, welches sich bei Vorliegen einer entsprechend hohen Temperatur selbst aktiviert. Dabei wird die externe Energiequelle aktiviert, um das Sicherheitsventil gezielt auszulösen. Es wird also das ohnehin vorhandene thermisch aktivierbare Sicherheitsventil genutzt, um eine gezielte bedarfsgerechte Entleerung des Speicherbehälters zu ermöglichen.

Des Weiteren gelten alle mit Bezug auf das erfindungsgemäße System genannten Weiterbildungen und Vorteile ebenso für das erfindungsgemäße Verfahren.

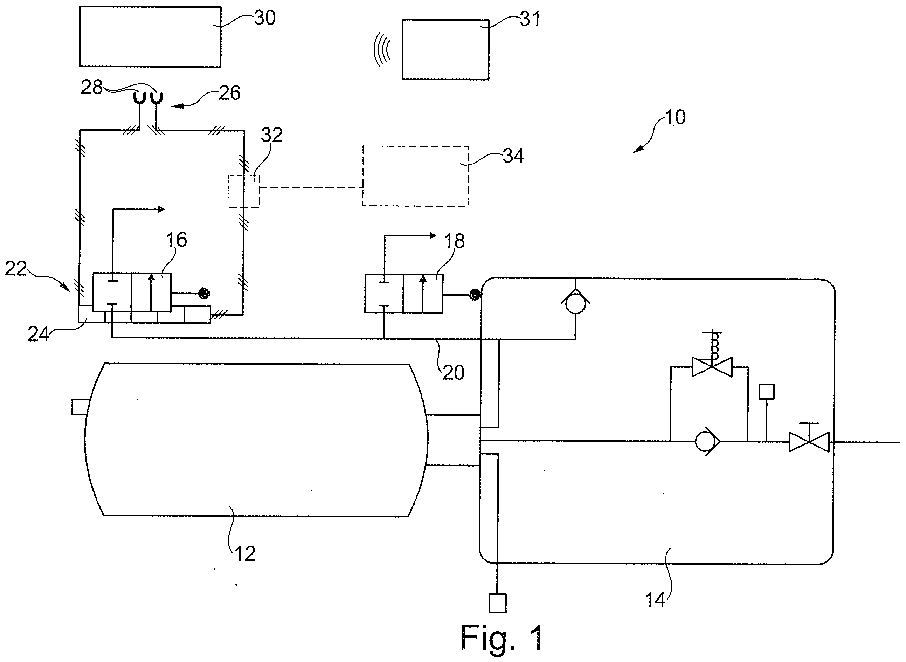

Weitere Merkmale und Vorteile der Erfindung ergeben sich aus der nachfolgenden Beschreibung einer bevorzugten Ausführungsform anhand der beigefügten Zeichnung. In dieser zeigt die einzige Figur eine schematische Ansicht eines erfindungsgemäßen Systems zur Speicherung eines unter Druck stehenden Gases in einem Kraftfahrzeug, in dem das erfindungsgemäße Verfahren durchgeführt wird.

Die einzige Figur zeigt ein System 10 zur Speicherung eines unter Druck stehenden Gases in einem Kraftfahrzeug, wobei es sich bei dem Gas insbesondere um Wasserstoff oder Erdgas handelt. Das System 10 weist einen Speicherbehälter 12 für das unter Druck stehende Gas auf, an dem ein Tankventil 14 vorgesehen ist, um das Gas z.B. einem Motor zuzuführen. Das Tankventil 14 umfasst diverse Ventile und Temperatur- bzw. Drucksensoren, die im Tankventil 14 zusammengefasst sind. Da das Tankventil 14 an sich bekannt und darüber hinaus seine genaue Funktionsweise für die vorliegende Erfindung nicht relevant ist, wird auf eine nähere Beschreibung an dieser Stelle verzichtet.

Weiterhin weist das System 10 zwei parallel zueinander angeordnete, thermisch aktivierbare Sicherheitsventile 16, 18 auf (auch als TPRD bezeichnet), welche über eine Leitung 20 sowie das Tankventil 14 mit dem Speicherbehälter 12 gekoppelt sind.

Die Sicherheitsventile 16, 18 können beispielsweise eine Verschlussmasse aufweisen, die in einem Strömungsweg des Gases angeordnet ist. Bei entsprechend hoher Temperatur von ca. 105-110°C im Bereich eines der Sicherheitsventile 16, 18 schmilzt die Masse auf, und das jeweilige Sicherheitsventil 16, 18 wird für das im Speicherbehälter 12 gespeicherte Gas durchlässig, aktiviert sich also auf diese Weise selbst. So wird in einem Brandfall das unter Druck stehende Gas aus dem Speicherbehälter 12 abgelassen. Alternativ können die Sicherheitsventile 16, 18 eine fluidgefüllte Glasampulle umfassen, die bei entsprechend hoher Temperatur birst und das Gas aus dem Speicherbehälter 12 entweichen lässt.

Weiterhin ist am Sicherheitsventil 16 eine Auslösevorrichtung 22 vorhanden, die eine zusätzliche, aktivierbare Entleerungsvorrichtung für den Speicherbehälter 12 bildet. Die Auslösevorrichtung 22 umfasst bei der gezeigten Ausgestaltung einen thermischen Aktuator in Form einer elektrischen Heizung 24, die am Sicherheitsventil 16 angeordnet und hier als Heizwiderstand ausgebildet ist. Die Auslösevorrichtung 22 weist weiterhin eine Schnittstelle 26 auf, die elektrische Anschlüsse 28 für eine externe Energiequelle 30 umfasst. Dabei sind die Schnittstelle 26 bzw. die Anschlüsse 28 in einem leicht zugänglichen Bereich des Kraftfahrzeugs, insbesondere in einem von außen zugänglichen Bereich des Kraftfahrzeugs angeordnet.

Im Bedarfsfall, etwa einem Unfall, bei dem der Speicherbehälter 12 beschädigt werden könnte, so dass die sichere Speicherung des Druckgases nicht mehr gewährleistet ist, wird die externe Energiequelle 30 an die Schnittstelle 26, genauer die Anschlüsse 28, der Auslösevorrichtung 22 angeschlossen und, nachdem sich eventuell anwesende Personen in Sicherheit bringen konnten, gezielt von extern aktiviert, insbesondere über Funk oder eine elektrische Zündleitung (in der Figur durch Pos. 31 angedeutet). Nach Aktivierung der externen Energiequelle 30 fließt Strom durch die Heizung 24 und diese erwärmt sich auf eine Temperatur, die ausreichend ist, um das Sicherheitsventil 16 gezielt auszulösen und so den Speicherbehälter 12 zu entleeren.

Um ein missbräuchliches Entleeren des Speicherbehälters 12 zu verhindern, kann die Entleerungs- bzw. Auslösevorrichtung 22 einen im normalen Fahrbetrieb offenen Unterbrechungsschalter 32 aufweisen, der erst durch ein Crashsignal eines Fahrzeugsicherheitssystems 34 geschlossen wird. Alternativ oder zusätzlich können die Anschlüsse 28 in einem Innenraum des Kraftfahrzeugs angeordnet sein.

Alternativ zur gezeigten Ausgestaltung mit einer elektrischen Heizung 24 kann die Entleerungs- bzw. Auslösevorrichtung 22 einen mechanischen oder pyrotechnischen Aktuator umfassen, der bei Aktivierung z.B. eine Glasampulle des Sicherheitsventils 16 zerstört.

Bei dem erfindungsgemäßen System 10 wird somit der Speicherbehälter 12 nach einem Unfall vor Ort gezielt entleert, wodurch sich ein Bersten des Behälters während Bergungsarbeiten, Transport oder Lagerung nach dem Unfall (also nicht in unmittelbarer zeitlicher Nähe zu dem Unfallereignis) verhindern lässt. Da beim Entleeren des Speicherbehälters 12 insbesondere bei Wasserstoff die Gefahr besteht, dass sich das Gas entzündet, sollte der Unfallort vor dem Entleeren geräumt werden. Zudem sind Zündquellen zu vermeiden und die Maßnahme ist nicht in geschlossenen Räumen, unter Brücken oder in Tunneln durchzuführen.

## Patentansprüche

1. System zur Speicherung eines unter Druck stehenden Gases in einem Kraftfahrzeug, mit
einem Speicherbehälter (12) und
wenigstens einem thermisch aktivierbaren Sicherheitsventil (16, 18) zur Entleerung des Speicherbehälters (12), welches sich bei Vorliegen einer entsprechend hohen Temperatur selbst aktiviert,
**dadurch gekennzeichnet, dass** eine zusätzliche, aktivierbare Entleerungsvorrichtung für den Speicherbehälter (12) vorgesehen ist, die eine Schnittstelle (26) für eine externe nicht zum Fahrzeug gehörigen, und von der Funktionstüchtigkeit der Fahrzeugelektronik unabhängige Energiequelle (30) hat, an die die externe Energiequelle (30) angeschlossen werden kann, um den Speicherbehälter (12) gezielt zu entleeren.

2. System nach Anspruch 1, **dadurch gekennzeichnet, dass** die zusätzliche Entleerungsvorrichtung eine am Sicherheitsventil (16) vorgesehene Auslösevorrichtung (22) umfasst, an deren Schnittstelle (26) die externe Energiequelle (30) angeschlossen werden kann, um das Sicherheitsventil (16) gezielt auszulösen.

3. System nach Anspruch 1 oder 2, **dadurch gekennzeichnet, dass** die Schnittstelle (26) Anschlüsse, insbesondere elektrische Anschlüsse (28), für die externe Energiequelle (30) aufweist, die in einem von außen zugänglichen Bereich des Kraftfahrzeugs angeordnet sind.

4. System nach einem der vorhergehenden Ansprüche, **dadurch gekennzeichnet, dass** die externe Energiequelle (30) nach Anschließen an die Entleerungsvorrichtung von extern aktiviert werden kann, um den Speicherbehälter (12) zu entleeren.

5. System nach Anspruch 4, **dadurch gekennzeichnet, dass** die Aktivierung ferngesteuert, insbesondere über Funk (31) oder eine elektrische Zündleitung, erfolgt.

6. System nach einem der Ansprüche 2, sowie 3 bis 5, wenn diese sich auf Anspruch 2 beziehen, **dadurch gekennzeichnet, dass** die Auslösevorrichtung (22) einen thermischen Aktuator, insbesondere eine elektrische Heizung (24), aufweist.

7. System nach Anspruch 6, **dadurch gekennzeichnet, dass** die Auslösevorrichtung (22) eine Heizspirale aufweist, mit der das thermisch aktivierbare Sicherheitsventil (16) zumindest teilweise umwickelt ist.

8. System nach einem der Ansprüche 1 bis 5, **dadurch gekennzeichnet, dass** die Entleerungsvorrichtung einen mechanischen oder einen pyrotechnischen Aktuator umfasst.

9. System nach einem der Ansprüche 3, sowie 4 bis 8, wenn diese sich auf Anspruch 3 beziehen, **dadurch gekennzeichnet, dass** die Anschlüsse (28) für die externe Energiequelle (30) in einem Innenraum des Kraftfahrzeugs angeordnet sind.

10. System nach einem der vorhergehenden Ansprüche, **dadurch gekennzeichnet, dass** die Entleerungsvorrichtung einen im normalen Fahrbetrieb offenen Unterbrechungsschalter (32) aufweist, der durch ein Crashsignal eines Fahrzeugsicherheitssystems (34) geschlossen wird.

11. Verfahren zum Entleeren eines Speicherbehälters (12) für ein unter Druck stehendes Gas in einem Kraftfahrzeug, in einem System (10) nach einem der vorhergehenden Ansprüche, **gekennzeichnet durch** folgende Schritte:
an eine an dem Speicherbehälter (12) vorgesehene Entleerungsvorrichtung wird im Bedarfsfall eine externe nicht zum Fahrzeug gehörige Energiequelle (30) angeschlossen, und
die externe nicht zum Fahrzeug gehörige Energiequelle (30) wird aktiviert, um über die dadurch betätigte Entleerungsvorrichtung den Speicherbehälter (12) gezielt zu entleeren.

## Claims

1. A system for storing a pressurised gas in a motor vehicle, said system comprising
a storage container (12) and
at least one thermally activatable safety valve (16, 18) for emptying the storage container (12), which safety valve activates automatically at a correspondingly high temperature,
**characterised in that** an additional, activatable emptying device is provided for the storage container (12) and has an interface (26) for an external power source (30) not belonging to the vehicle and independent of the functionality of the vehicle electronics, it being possible to connect the external power source (30) to said interface in order to empty the storage container (12) selectively.

2. A system according to claim 1, **characterised in that** the additional emptying device comprises a trigger device (22) provided on the safety valve (16), it being possible to connect the external power source (30) to the interface (26) of said trigger device in order to trigger the safety valve (16) selectively.

3. A system according to claim 1 or 2, **characterised in that** the interface (26) comprises connections, more especially electrical connections (28), for the external power source (30), which are arranged in a region of the motor vehicle that is accessible from the outside.

4. A system according to any one of the preceding claims, **characterised in that** the external power source (30) can be activated externally following connection to the emptying device in order to empty the storage container (12).

5. A system according to claim 4, **characterised in that** the activation is remotely controlled, more especially via radio (31) or an electrical ignition lead.

6. A system according to any one of claims 2 and 3 to 5 when these refer to claim 2, **characterised in that** the trigger device (22) comprises a thermal actuator, more especially an electric heater (24).

7. A system according to claim 6, **characterised in that** the trigger device (22) comprises a heating coil, which is at least partially wound around the thermally activatable safety valve (16).

8. A system according to any one of claims 1 to 5, **characterised in that** the emptying device comprises a mechanical or a pyrotechnic actuator.

9. A system according to any one of claims 3 and 4 to 8 when these refer to claim 3, **characterised in that** the connections (28) for the external power source (30) are arranged in an interior of the motor vehicle.

10. A system according to any one of the preceding claims, **characterised in that** the emptying device comprises an interruption switch (32) that is open during normal driving operation and that is closed by a crash signal of a vehicle safety system (34).

11. A method for emptying a storage container (12) for a pressurised gas in a motor vehicle, in a system (10) according to any one of the preceding claims, **characterised by** the following steps:
an emptying device provided on the storage container (12) is connected as necessary to an external power source (30) not belonging to the vehicle, and
the external power source (30) not belonging to the vehicle is activated in order to selectively empty the storage container via the emptying device thus actuated.

## Revendications

1. Système de stockage d'un gaz sous pression dans un véhicule automobile comprenant :
- un réservoir de stockage (12), et
- au moins une soupape de sécurité (16, 18) activée de manière thermique pour vider le réservoir de stockage (12) et qui est activée automatiquement lorsque la température atteint un certain niveau,
système **caractérisé par**
un dispositif d'évacuation supplémentaire, activé pour le réservoir de stockage (12) et qui a une interface (26) pour une source d'énergie (30) externe, n'appartenant pas au véhicule et indépendante du bon fonctionnement de l'électronique du véhicule, interface qui peut être raccordée à la source d'énergie externe (30) pour vider de manière ciblée le réservoir de stockage (12).

2. Système de stockage selon la revendication 1,
**caractérisé en ce que**
le dispositif d'évacuation supplémentaire comporte un dispositif de déclenchement (22) sur la soupape de sécurité (16) et dont l'interface (26) peut être raccordée à la source d'énergie externe (30) pour déclencher la soupape de sécurité (16) de manière ciblée.

3. Système de stockage selon la revendication 1 ou 2,
**caractérisé en ce que**
l'interface (26) comporte des bornes, notamment des bornes électriques (28) pour la source d'énergie externe (30) et qui sont dans une zone du véhicule accessible de l'extérieur.

4. Système de stockage selon l'une des revendications précédentes,
**caractérisé en ce qu'**
après le branchement au dispositif d'évacuation, la source d'énergie externe (30) peut être activée pour vider le réservoir de stockage (12).

5. Système de stockage selon la revendication 4,
**caractérisé en ce que**
l'activation est télécommandée, notamment par radio (31) ou par une ligne d'allumage électrique.

6. Système de stockage selon l'une des revendications 2 ainsi que 3 à 5 rattachées à la revendication 2,
**caractérisé en ce que**
le dispositif de déclenchement (22) comporte un actionneur thermique, notamment un moyen de chauffage électrique (24).

7. Système de stockage selon la revendication 6,
**caractérisé en ce que**
le dispositif de déclenchement (22) comporte une spirale chauffante qui entoure au moins en partie la soupape de sécurité (16) activée de manière thermique.

8. Système de stockage selon l'une des revendications 1 à 5,
**caractérisé en ce que**
le dispositif d'évacuation comporte un actionneur mécanique ou pyrotechnique.

9. Système de stockage selon l'une des revendications 3 ainsi que 4 à 8 rattachées à la revendication 3,
**caractérisé en ce que**
les bornes (28) pour la source d'énergie externe (30) sont logées dans un volume intérieur du véhicule automobile.

10. Système de stockage selon l'une des revendications précédentes,
**caractérisé en ce que**
le dispositif d'évacuation comporte un interrupteur (32) ouvert pendant le fonctionnement de circulation normale et qui est raccordé par un signal de collision du système de sécurité (34) du véhicule.

11. Procédé de vidange d'un réservoir de stockage (12) d'un gaz sous pression dans un véhicule automobile dans un système (10) selon l'une des revendications précédentes,
**caractérisé par** les étapes suivantes :
- on raccorde un dispositif d'évacuation du réservoir de stockage (12), si nécessaire une source d'énergie externe (30) ne faisant pas partie du véhicule, et
- on active la source d'énergie externe (30) ne faisant pas partie du véhicule pour vidanger de manière ciblée le réservoir de stockage (12) par l'actionnement du dispositif de vidange.
